# FASCICULE DE BREVET EUROPEEN

(11) **EP 2 074 007 B1**
(45) Date de publication et mention de la délivrance du brevet: **27.07.2011**
(21) Numéro de dépôt: 07858513.0
(22) Date de dépôt: 05.10.2007
(51) Int. Cl.: B60W 30/14

(54) **DISPOSITIF DE CONTRÔLE DE LA VITESSE D'UN VÉHICULE**
VORRICHTUNG ZUR GESCHWINDIGKEITSSTEUERUNG BEI EINEM FAHRZEUG
DEVICE FOR CONTROLLING THE SPEED OF A VEHICLE

(30) Priorité: 05.10.2006 FR 0608763
(43) Date de publication de la demande: 01.07.2009
(73) Titulaire: Peugeot Citroën Automobiles SA, 78140 Vélizy-Villacoublay (FR)
(72) Inventeur: FRADIN, Loïc, F-94240 L'hay Les Roses (FR); DUPUIS, Didier, F-78440 Fontenay Saint-pere (FR)
(86) Numéro de dépôt international: PCT/FR2007/052082
(87) Numéro de publication internationale: WO 2008/040919

(56) Documents cités:
- EP-A- 0 519 477
- EP-A- 1 342 607
- EP-A- 1 445 452
- US-A- 4 829 438
- US-A- 6 078 859
- US-A1- 2002 094 899

## Description

L'invention concerne un dispositif de contrôle de la vitesse d'un véhicule et notamment d'un véhicule évoluant à faible vitesse. En particulier, l'invention s'applique au véhicule automobile, disposant par exemple d'une boîte de vitesses robotisée ou encore d'une boîte de vitesse automatique.

L'agrément de conduite d'un véhicule s'apprécie selon différents critères au cours des différentes phases de vie du véhicule. Plus particulièrement parmi les phases de vie au cours desquelles le véhicule évolue à basse vitesse, c'est-à-dire à une vitesse de l'ordre de quelques kilomètres par heure, peuvent être citées les phases de décollage, de manoeuvre, de montée/descente et de recul du véhicule.

La phase de décollage correspond à la mise en mouvement du véhicule en vue d'entrer dans une phase de roulage. L'agrément de conduite du véhicule s'apprécie alors en particulier par le critère de brio au décollage, c'est-à-dire le dynamisme de la réponse du véhicule suite à la demande du conducteur. La phase de manoeuvre est une phase pendant laquelle le véhicule se déplace à basse vitesse et à basse accélération, en vue de déplacer le véhicule jusqu'à une position donnée. L'agrément de conduite du véhicule s'apprécie alors par la manoeuvrabilité et se qualifie alors notamment en terme de dosabilité, c'est-à-dire la facilité et le confort avec laquelle le conducteur peut effectuer ce déplacement par la pédale, un compromis étant à trouver avec d'autres critères comme le temps de réaction, la douceur (l'absence d'à-coups), la consommation véhicule à l'arrêt, l'acoustique et vibrations,...

La manoeuvrabilité du véhicule s'avère aussi un critère particulièrement pertinent dans les phases de montée (pente dont l'inclinaison est de même signe que le rapport de boîte de vitesses engagé) / descente (pente et rapport de signe opposé), et les phases de recul (mouvement du véhicule dans le sens opposé à celui désiré, donné par le signe du rapport de boite de vitesses engagé).

La manoeuvrabilité du véhicule dans les phases au cours desquelles le véhicule évolue à basse vitesse est affectée par de fortes variations de la réponse du véhicule en fonction des situations de vie du véhicule, comme par exemple les variations de température de l'environnement, le degré d'inclinaison de la route,...

Elles sont essentiellement dues à une mauvaise maîtrise des phénomènes de frottements au niveau de l'embrayage, dans toute la gamme de situations de vie que peut rencontrer le véhicule. Ces phénomènes sont d'autant moins maîtrisés que l'embrayage est soumis à de forts échauffements lors notamment des démarrages en pente, ou encore lors de montées de trottoir.

On connait du document EP-A-1 445 452, qui décrit le préambule de la revendication 1, un dispositif de contrôle de la vitesse d'un véhicule, comportant un module de régulation basse vitesse générant des consignes de contrôle de la dynamique du véhicule pour la régulation basse vitesse. Le dispositif peut comporter aussi un module facultatif générant des consignes de contrôle de la dynamique du véhicule adaptées pour maintenir le véhicule sensiblement immobile, module utile à la gestion des transitoires d'arrêt et de mise en mouvement du véhicule, transitoires répondant par exemple à des fonctionnalités d'aide, partielle ou totale, au maintien en pente du véhicule. Le dispositif comporte aussi un module générant des consignes de contrôle de la dynamique du véhicule par défaut. Le dispositif comporte enfin un module recevant les consignes de contrôle de la dynamique du véhicule issues des précédents modules. Ce module détermine lesquelles desdites consignes de contrôle de la dynamique du véhicule reçues sont pertinentes en fonction de la situation de vie du véhicule, et génère des consignes de contrôle de la dynamique du véhicule à partir des consignes reçues jugées pertinentes.

On connaît également du document EP-A-0 519 477, un dispositif comportant un module de régulation basse vitesse comporte des entrées par lesquelles ledit dispositif reçoit au moins une consigne de vitesse et des mesures et/ou des estimations de la vitesse du véhicule. Le module de régulation basse vitesse comporte aussi un soustracteur générant un signal correspondant au résultat de la différence entre la consigne de vitesse et la vitesse du véhicule. Le module de régulation basse vitesse comporte encore un bloc de régulation de la vitesse recevant le signal du soustracteur, et générant des commandes de contrôle de la dynamique du véhicule compensant les écarts entre la vitesse du véhicule et les consignes de vitesse

Egalement décrit dans ce même document, le module de régulation basse vitesse comporte en addition des entrées par lesquelles ledit dispositif reçoit une mesure et/ou une estimation de l'accélération longitudinale du véhicule. Le module de régulation basse vitesse comporte aussi en addition un soustracteur générant un signal correspondant au résultat de la différence entre un signal de commande en accélération généré par le bloc de régulation de la vitesse et l'accélération longitudinale du véhicule. Le module de régulation basse vitesse comporte encore en addition un bloc de régulation de l'accélération longitudinale recevant le signal du soustracteur, générant des commandes de contrôle de la dynamique du véhicule compensant les écarts entre l'accélération du véhicule et la commande en accélération générée par le bloc de régulation de la vitesse.

Aucun de ces deux documents ne se préoccupe de la compensation du couple résistif dû aux roues du véhicule lors de la génération d'un couple moteur à partir des informations de vitesse, d'accélération et du couple résistif du véhicule.

L'invention a notamment pour but de pallier les inconvénients précités. A cet effet, l'invention a pour objet un dispositif de contrôle de la dynamique d'un véhicule conforme à la partie caractérisante de l'objet de la revendication 1.

Avantageusement, le dispositif comporte un bloc recevant en entrée un signal de commande en accélération généré par le bloc de régulation de la vitesse et générant en sortie un signal de commande en accélération, ledit signal étant limité à un certain niveau défini statiquement ou dynamiquement, et lequel signal limité alimentant le bloc de régulation d'accélération.

Avantageusement, le dispositif comporte un bloc recevant en entrée le signal issue du sommateur et générant en sortie un signal de commande de couple à appliquer sur chaque roue du véhicule, ledit signal étant limité à ce que les organes agissant sur la dynamique du véhicule peuvent effectivement fournir.

Avantageusement, le dispositif comporte un module recevant un signal comportant diverses informations sur l'environnement et l'état du véhicule et générant un signal correspondant à une consigne de couple adaptée à maintenir le véhicule sensiblement immobile, le signal étant transmis au module recevant les consignes de régulation de vitesse.

L'invention a notamment pour avantages qu'elle permet d'assurer une reproductibilité de la réponse du véhicule à la demande du conducteur, à environnement comparable. L'invention permet encore d'assurer une progressivité cohérente de la réponse du véhicule en fonction de l'évolution de l'environnement, à demande du conducteur identique.

D'autres caractéristiques et avantages de l'invention apparaîtront à l'aide de la description qui suit faite en regard des dessins annexés qui représentent :
- la figure 1, un mode de réalisation d'un dispositif de contrôle de la dynamique d'un véhicule selon l'invention ;
- la figure 2, un procédé selon l'invention de régulation de la vitesse d'un véhicule évoluant à basse vitesse ;
- la figure 3, un mode de réalisation du dispositif de commande du dispositif de commande selon l'invention.

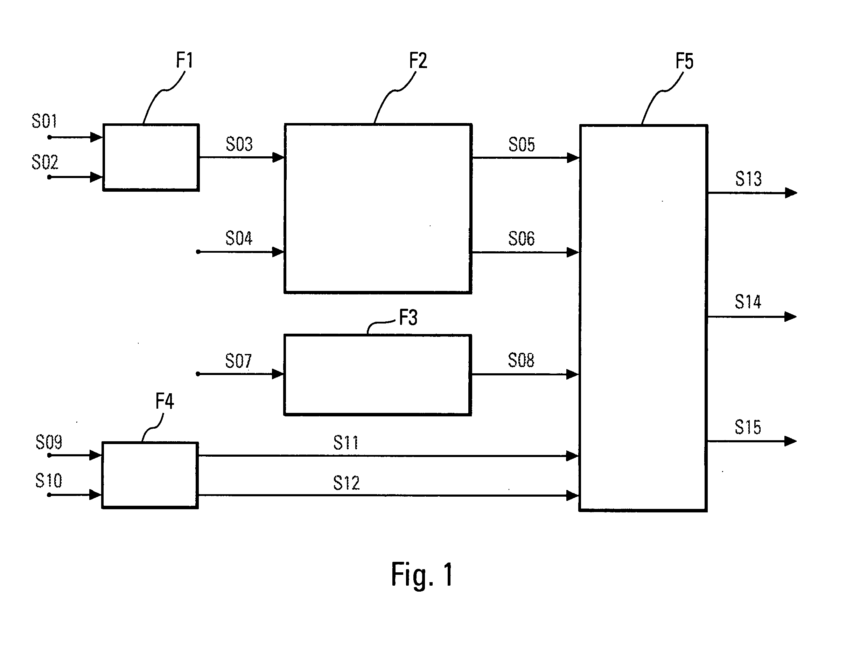

La figure 1 illustre par un synoptique un mode de réalisation d'un dispositif de contrôle de la dynamique d'un véhicule selon l'invention. Ce dispositif est en particulier adapté à la régulation de la vitesse du véhicule en phase de manoeuvres, ainsi qu'aux phases de transitions de début ou fin de manoeuvre associées, c'est-à-dire à faible vitesse. Dans l'état de l'art actuel, lorsqu'un conducteur agit sur la pédale d'accélération et la maintient dans une position, il maintient le couple du groupe motopropulseur à une valeur quasi-constante. Un des objets du dispositif selon l'invention est de permettre au conducteur de manoeuvrer le véhicule à vitesse constante lorsque celui-ci maintient la pédale d'accélération dans une position, pour notamment faciliter la maîtrise des petits déplacements, et éviter par exemple que la vitesse évolue de manière incontrôlée quand le véhicule s'approche puis franchit un obstacle.

Le dispositif selon l'invention comporte un module F1 générant une consigne de vitesse en fonction notamment de la position de la pédale d'accélération du véhicule. Le module F1 reçoit en entrée un signal S01 correspondant à la position courante de la pédale d'accélérateur. Le module F1 peut recevoir encore par l'intermédiaire d'un ou plusieurs signaux S02 diverses informations sur l'environnement et l'état du véhicule comme par exemple la pente au sens de la valeur de l'inclinaison de la voirie sur laquelle évolue le véhicule ou encore le rapport de vitesse engagé. En fonction des données issues du signal S01, éventuellement complétées par les données provenant du signal S02, le module F1 génère un signal S03 correspondant à une consigne de vitesse du véhicule. Le signal S03 est donc fonction de la position pédale, et éventuellement du rapport de vitesse engagé, de la pente, voire d'autres informations concourrant à déterminer la volonté du conducteur en terme de vitesse du véhicule selon l'environnement.

Le dispositif selon l'invention comporte un régulateur de vitesse F2. Le régulateur de vitesse F2 reçoit le signal S03 correspondant à une consigne de vitesse du véhicule délivrée par le module F1. Le régulateur de vitesse F2 peut recevoir encore, par l'intermédiaire d'un ou plusieurs signaux S04, les données relatives à la vitesse du véhicule, à l'accélération longitudinale, à la pente au sens de l'inclinaison de la voirie, aux estimations des efforts résistifs rencontrés par le véhicule, des informations sur l'état des organes constitutif du véhicule, en particulier de l'embrayage...

Le régulateur de vitesse F2 génère des consignes permettant de réguler la vitesse tout en respectant un profil donné d'accélération longitudinale adapté notamment au véhicule. En particulier, le régulateur de vitesse F2 génère en sortie un signal S05 correspondant à une consigne de couple à transmettre aux différentes roues et éventuellement un signal S06 correspondant à une consigne de régime moteur. Le signal S05 peut transporter une consigne de couple positive ou négative, permettant d'assurer la régulation de vitesse tout en respectant les contraintes d'évolution de l'accélération. Quant au signal S06, la consigne de régime moteur transportée permet de contrôler et maîtriser les fluctuations du régime moteur dans les phases de manoeuvres.

Le dispositif selon l'invention comporte un module F4 générant une consigne de couple en fonction notamment de la position de la pédale d'accélération du véhicule. Le module F4 reçoit en entrée un signal S09 correspondant à la position courante de la pédale d'accélérateur. Le module F4 peut recevoir encore par l'intermédiaire d'un ou plusieurs signaux S10 diverses informations relatives à l'environnement et l'état du véhicule comme par exemple la pente au sens de la valeur de l'inclinaison de la voirie sur laquelle évolue le véhicule, la vitesse véhicule, ou encore le rapport de vitesse engagé. En fonction des données issues du signal S09 éventuellement complétées par les données provenant du signal S10, le module F4 génère en sortie un signal S11 correspondant à une consigne de couple à transmettre aux différentes roues et éventuellement un signal S12 correspondant à une consigne de régime moteur.

Dans un mode de réalisation, le dispositif selon l'invention comporte aussi un module F3. Le module F3 reçoit en entrée un signal S07 comportant diverses informations sur l'environnement et l'état du véhicule comme par exemple la pente au sens de la valeur de l'inclinaison de la voirie sur laquelle évolue le véhicule ou encore le rapport de vitesse engagé. A partir de ces informations, le module F3 génère un signal S08 correspondant à une consigne de couple à transmettre aux différentes roues, de telle sorte que le véhicule soit sensiblement immobile en pente. Le module F3 permet d'assurer ainsi l'immobilisation du véhicule dans une pente, soit momentanément soit de façon permanente, de façon automatique ou par capture de la pression mise par le conducteur par la pédale de frein. La fonction assurée par le module F3 est aussi connue sous le terme anglo-saxon de « Hill Assist » lorsque l'immobilisation est momentanée ou « Hill Holder » lorsque l'immobilisation est permanente.

Le dispositif selon l'invention comporte un module F5 recevant les signaux S05, S06, S11, S12 et éventuellement S08. Le module F5 détecte dans quelle situation de vie se trouve le véhicule. Le module F5 détermine donc si le véhicule est en phase de manoeuvre, de roulage, d'arrêt... En fonction de la connaissance de la situation de vie du véhicule, le module F5 détermine quelles consignes reçues en entrée véhiculées par les signaux S05, S06, S11, S12 et éventuellement S08 sont pertinentes. Le module F5 génère en sortie un signal S13 correspondant à une consigne de couple à transmettre aux différentes roues, et éventuellement un signal S14 correspondant à une consigne de régime moteur, et éventuellement un signal S15 correspondant une consigne de freinage. Les signaux S13, S14, S15 sont générées en transmettant, adaptant ou fusionnant un ou plusieurs signaux reçus en entrée S05, S06, S11, S12 et éventuellement S08. A titre d'exemple, les consignes transportées par les signaux S05 et S06 reçues du régulateur de vitesse F2 sont pertinentes pour une plage de vitesse donnée (non nulle et inférieure à un seuil donné), lorsque le rapport de vitesse engagé correspond à la première vitesse ou la marche arrière, pour une plage de position de la pédale d'accélération donnée, lorsque le freinage n'est pas actif...

Lorsque l'enfoncement de la pédale d'accélérateur est plus important ou lorsque le rapport de vitesse engagé est plus important, un mode par défaut doit être utilisé, et les consignes reçues transportées par les signaux SU et S12 s'avèrent pertinentes. Ce mode par défaut, peut par exemple être un mode de contrôle en couple moteur ou un mode de contrôle en couple à la roue, et plus généralement tout autre type de contrôle longitudinal du véhicule. Si le module F3 est présent, lorsque le véhicule est à l'arrêt et la position de la pédale d'accélération correspond à la position pied levé, le signal S08 est pertinent. Le module F5 sélectionne donc les signaux pertinents parmi l'ensemble des signaux reçus S05, S06, S11, S12 et éventuellement S08. Le module F5 peut encore adapter les signaux jugés pertinents pour les faire correspondre à diverses stratégies. Ces stratégies permettent par exemple d'aménager des transitions entre les différentes phases de vie du véhicule, par exemple la transition entre la phase de roulage et de manoeuvre, tout en respectant les attentes du conducteur. Ces stratégies peuvent en outre assurer la préservation des organes constitutifs du véhicule. Le module F5 peut aussi s'assurer de la coordination entre le groupe motopropulseur et le système de freinage au cours des phases de manoeuvre et d'arrêt.

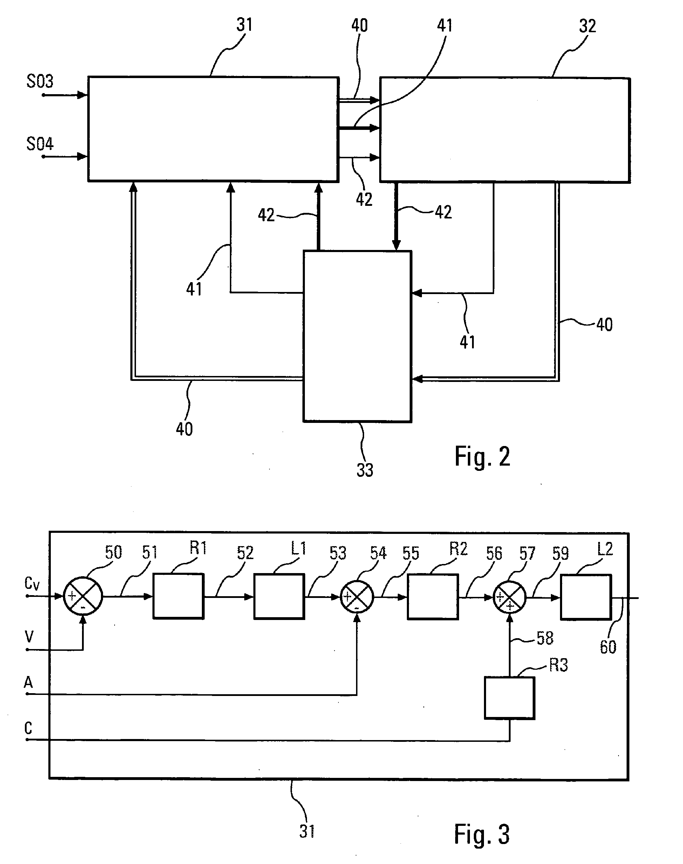

La figure 2 montre un synoptique représentant un procédé selon l'invention de régulation de la vitesse d'un véhicule évoluant à basse vitesse. Les éléments identiques aux éléments déjà présentés sur les autres figures portent les mêmes références. Lorsque le dispositif selon l'invention, décrit notamment à la figure 1, se trouve dans une situation où les consignes transportées par les signaux S05 et S06 par le régulateur de vitesse F2 sont pertinentes, le procédé de régulation de la vitesse d'un véhicule selon l'invention peut être mis en oeuvre, notamment par le module F5. Le procédé de régulation de la vitesse d'un véhicule selon l'invention comporte une étape 31 de commande, une étape 32 de processus, une étape 33 de mesures et/ou d'estimations des paramètres de l'environnement du véhicule.

L'étape 31 de commande, est mise en oeuvre dans le régulateur de vitesse F2. En conséquence, l'étape 31 de commande reçoit en entrée les signaux S03 et S04, ou, éventuellement, directement les signaux S01 et S02. L'étape 31 produit des commandes à destination de l'étape 32. L'étape 32 de processus reçoit les commandes émises par l'étape 31 et demande l'exécution desdites commandes aux organes agissant sur la dynamique du véhicule, en particulier au groupe motopropulseur et au système de freinage. Plus spécifiquement, l'étape 32 met en oeuvre les moyens nécessaires pour appliquer les consignes relatives à la vitesse, l'accélération, au couple moteur ou frein appliqué à chaque roue... L'étape 33 réalisant des estimations et des mesures des paramètres peut être mise en oeuvre par différents capteurs et calculateurs permettant soit de mesurer directement ou indirectement les paramètres de l'environnement du véhicule soit de les estimer. En particulier, l'étape 33 mesure et/ou estime la vitesse du système, et éventuellement l'accélération du système ou les couples appliqués aux différentes roues du véhicule. L'étape 32 par l'intermédiaire des organes agissant sur la dynamique du véhicule met donc en oeuvre les commandes reçues de l'étape 31, en compensant les écarts entre les mesures et/ou les estimations des paramètres de l'environnement du véhicule et les consignes de vitesses reçues via notamment les signaux S03 et S04.

Le procédé selon l'invention effectue donc une régulation en cascade permettant de maîtriser la vitesse et l'accélération du véhicule ainsi qu'une calibration indépendante de la solution organique, dépendante uniquement des caractéristiques et critères associés au système.

Pour cela, le procédé selon l'invention peut comporter trois boucles fermées d'asservissement. Le procédé comporte une boucle externe 40 de régulation de vitesse. La boucle externe 40 reçoit en entrée une consigne de vitesse acquise à l'étape 31 de commande. Ladite consigne de vitesse est issue principalement de la pédale d'accélération, pondérée par différents paramètres tels que la pente, ou le rapport de vitesse engagé, ...

A partir de la consigne de vitesse, une commande en vitesse est générée à l'étape 31 et transmise à l'étape 32 de processus. La vitesse effective du système peut par exemple être mesurée par le calculateur du système de freinage. Le procédé selon l'invention peut encore comporter une boucle interne 41 de régulation d'accélération. La boucle interne 41 reçoit en entrée une consigne d'accélération longitudinale du véhicule. La consigne d'accélération est calculée à l'étape 31 de commande. La consigne d'accélération est déduite principalement de l'erreur de vitesse reçue par la boucle externe 40. La consigne d'accélération est ensuite mise en oeuvre au cours de l'étape 32 de processus. L'accélération effective du véhicule peut par exemple être estimée à partir d'une mesure par accéléromètre et/ou du calcul de la dérivée de la vitesse et/ou d'une estimation de la pente. La boucle interne 41 permet d'améliorer sensiblement les performances du procédé selon l'invention, notamment en qualité de suivi et en réactivité. Le procédé selon l'invention peut aussi comporter une boucle additionnelle 42 de compensation des efforts résistifs subis par le système. La boucle additionnelle 42 peut être une boucle de régulation prédictive ou selon le terme anglo-saxon « Feed Forward » agissant sur la boucle interne 41.

La figure 3 montre par un synoptique un mode de réalisation d'un dispositif de commande mettant en oeuvre l'étape 31 de commande selon l'invention. Les éléments identiques aux éléments déjà présentés sur les autres figures portent les mêmes références. Le dispositif de commande mettant en oeuvre l'étape 31 de commande selon l'invention peut être mis en oeuvre dans un bloc R2 de régulation de l'accélération. Le dispositif de commande comporte une entrée par laquelle il reçoit une consigne de vitesse Cv. La consigne de vitesse Cv peut être par exemple comprise ou déduite des signaux S03 et S04. Le dispositif de commande reçoit encore des mesures et/ou des estimations de la vitesse V du véhicule, de l'accélération longitudinale A du véhicule et du couple résistif C appliqué à chaque roue du véhicule. Ces mesures et/ou estimations sont par exemple générés au cours de l'étape 33 du procédé selon l'invention. Le dispositif de commande comporte un soustracteur 50, permettant de soustraire à la consigne de vitesse Cv la vitesse V du véhicule. Le signal 51 résultant de la soustraction et représentant l'erreur de vitesse, est transmis à un bloc R1 de régulation de vitesse. Le bloc R1 délivre en sortie un signal de consigne en accélération 52 visant à annuler l'erreur de vitesse 51. Le signal de consigne en accélération 52 est transmis à un bloc L1 de limitation de l'accélération. Le bloc L1 limite à un certain niveau défini statiquement ou dynamiquement le signal de consigne en accélération 52 afin de respecter un certain gabarit d'accélération et de dérivée d'accélération (aussi désigné selon le terme anglo-saxon jerk). Le bloc L1 joue le rôle d'un levier de calibration de l'agrément de dynamique longitudinale. Le bloc L1 délivre en sortie un signal d'accélération limité 53. Le bloc L1 peut aussi informer le bloc R1 de cette saturation, pour adapter les stratégies et l'état du régulateur. Le signal d'accélération limité 53 est acheminé vers un soustracteur 54. Le soustracteur 54 délivre un signal 55 correspondant à la soustraction au signal d'accélération limité 53 de l'accélération A du véhicule mesurée et/ou estimée. Le régulateur d'accélération R2 reçoit l'erreur d'accélération portée par le signal 55. Le régulateur d'accélération R2 a pour fonction de réguler l'accélération longitudinale du véhicule, grandeur équivalente à la dérivée de la vitesse du véhicule par rapport au temps, de manière à annuler l'erreur d'accélération portée par le signal 55. Le régulateur d'accélération R2 génère en sortie un signal 56 correspondant à une consigne de couple à appliquer sur chaque roue du véhicule ou à une consigne globale au véhicule (par exemple un effort longitudinal équivalent). Le régulateur d'accélération R2 remplace avantageusement une boucle ouverte de contrôle de l'accélération : en effet une telle boucle ouverte ne prend pas en compte de manière satisfaisante les dispersions sur la masse, la pente, les efforts résistifs...

Un bloc R3 reçoit en entrée les mesures et/ou les estimations du couple résistif C appliqué à chaque roue du véhicule ou globalement aux roues du véhicule. Le bloc R3 a pour fonction d'estimer le couple résistif de chaque roue à compenser. L'estimation du couple résistif C peut être obtenue, par exemple, en calculant la différence entre le couple appliqué par le groupe motopropulseur à une roue et le produit de l'inertie nominale du véhicule ramenée à cette roue et de l'accélération de cette roue. Le couple résistif C peut encore inclure une estimation de la loi de route, de la pente, plus éventuellement un profil adapté à simuler une montée de trottoir, une équivalence à une variation de masse ou de rayon de roue, etc.

Le bloc R3 délivre en sortie un signal 58. correspondant à la compensation du couple roue extérieur. Un sommateur 57 se charge de sommer en un signal 59 le signal 56 et le signal 58. Le signal 59 est alors transmis à un bloc L2. Le bloc L2 a pour fonction de générer un signal 60 correspondant à une consigne de couple à appliquer sur chaque roue limitée à ce que les organes, comme par exemple le groupe motopropulseur ou le système de freinage, peuvent effectivement fournir. Le bloc L2 peut aussi informer les blocs R1 et R2 de cette saturation, pour adapter les stratégies.

## Revendications

1. Dispositif de contrôle de la vitesse d'un véhicule, notamment d'un véhicule automobile, comportant :
• un module (F1) générant une consigne de vitesse (S03) en fonction de la position de la pédale d'accélération du véhicule (S01) ;
• un régulateur de vitesse (F2) générant des consignes de couple (S05) ;
• un module (F4) générant des consignes de couple (S11) ;
• un module (F5) recevant les consignes de couple du régulateur de vitesse (F2) et des autres modules (F4), ledit module (F5) déterminant lesquelles desdites consignes reçues (S05, S06, S11, S12) sont pertinentes en fonction de la situation de vie du véhicule, ledit module (F5) générant des consignes de couple à partir des consignes reçues (S05, S06, S11, S12) jugées pertinentes ;
dans lequel, le module (F2) de régulation basse vitesse comporte :
• des entrées par lesquelles ledit dispositif reçoit au moins une consigne de vitesse (Cv) et des mesures et/ou des estimations de la vitesse (V) du véhicule ;
• un soustracteur (50) générant un signal (51) correspondant au résultat de la différence entre la consigne de vitesse (Cv) et la vitesse (V) du véhicule ;
• un bloc (R1) de régulation de la vitesse recevant le signal (51) du soustracteur (50), générant une commande de couple (S05) compensant les écarts entre la vitesse (V) du véhicule et les consignes de vitesse (Cv) ;
et dans lequel, le module (F2) de régulation basse vitesse comporte :
• des entrées additionnelles par lesquelles ledit dispositif reçoit des mesures et/ou des estimations de l'accélération longitudinale (A) du véhicule ;
• un soustracteur supplémentaire (54) générant un signal (55) correspondant au résultat de la différence entre un signal de commande en accélération (52,53) généré par le bloc (R1) de régulation de la vitesse et l'accélération longitudinale mesurée ou estimée (A) du véhicule ;
• un bloc complémentaire (R2) de régulation de l'accélération longitudinale recevant le signal (55) du soustracteur (54), générant des commandes de régulation compensant les écarts entre l'accélération longitudinale mesurée ou estimée (A) du véhicule et la commande en accélération (52,53) générée par le bloc (R1) ;
**caractérisé en ce que** le module (F2) de régulation basse vitesse comporte en outre :
• des entrées additionnelles par lesquelles ledit dispositif reçoit des mesures et/ou des estimations du couple résistif (C) appliqué à chaque roue du véhicule ;
• un bloc complémentaire (R3) de compensation du couple résistif de chaque roue, recevant les mesures et/ou les estimations du couple résistif (C) appliqué à chaque roue du véhicule, délivrant la compensation du couple résistif (58) à appliquer ;
• un sommateur supplémentaire (57) générant un signal (59) correspondant au résultat de la somme entre un signal (56) de commande de couple à appliquer sur chaque roue du véhicule généré par le bloc régulateur d'accélération (R2) et la compensation du couple résistif (58) à appliquer.

2. Dispositif selon la revendications 1, **caractérisé en ce qu'**il comporte un bloc (L1) recevant en entrée un signal de commande en accélération (52) généré par le bloc (R1) de régulation de la vitesse et générant en sortie un signal (53) de commande en accélération, ledit signal (53) étant limité à un certain niveau défini statiquement ou dynamiquement.

3. Dispositif selon les revendications 1 ou 2, **caractérisé en ce qu'**il comporte un bloc (L2) recevant en entrée soit le signal (56) issu du régulateur (R2), soit le signal (59) issue du sommateur (57) et générant en sortie un signal (60) de commande de couple à appliquer sur chaque roue du véhicule, ledit signal (60) étant limité à ce que les organes agissant sur la dynamique du véhicule peuvent effectivement fournir.

4. Dispositif selon l'une quelconque des revendications 1 à 3, **caractérisé en ce qu'**il comporte un module (F3) recevant un signal (S07) comportant diverses informations sur l'environnement et l'état du véhicule et générant un
signal (S08) correspondant à une consigne de couple adaptée à maintenir le véhicule sensiblement immobile, le signal (S07) étant transmis au module (F5) recevant les consignes de régulation de vitesse.

## Claims

1. Device for controlling the speed of a vehicle, in particular of a motor vehicle, comprising:
• a module (F1) generating a speed setpoint (S03) as a function of the position of the accelerator pedal of the vehicle (S01);
• a speed regulator (F2) generating torque setpoints (S05);
• a module (F4) generating torque setpoints (S11);
• a module (F5) receiving the torque setpoints of the speed regulator (F2) and of the other modules (F4), the said module (F5) determining which of the said received setpoints (S05, S06, S11, S12) are relevant as a function of the situation of the life of the vehicle, the said module (F5) generating torque setpoints from the received setpoints (S05, S06, S11, S12) which are deemed to be relevant;
in which the low speed regulation module (F2) comprises:
• inputs through which the said device receives at least one speed setpoint (Cv) and measurements and/or estimates of the speed (V) of the vehicle;
• a subtractor (50) generating a signal (51) corresponding to the result of the difference between the speed setpoint (Cv) and the speed (V) of the vehicle;
• a block (R1) for regulation of the speed receiving the signal (51) of the subtractor (50), generating a torque control (S05) compensating the differences between the speed (V) of the vehicle and the speed setpoints (Cv);
and in which the low speed regulation module (F2) comprises:
• additional inputs through which the said device receives measurements and/or estimates of the longitudinal acceleration (A) of the vehicle;
• a supplementary subtractor (54) generating a signal (55) corresponding to the result of the difference between a control signal in acceleration (52, 53) generated by the block (R1) for regulation of the speed and the longitudinal acceleration, measured or estimated, (A) of the vehicle;
• a complementary block (R2) for regulation of the longitudinal acceleration receiving the signal (55)of the subtractor (54), generating regulation controls compensating for the differences between the longitudinal acceleration, measured or estimated, (A) of the vehicle and the control in acceleration (52, 53) generated by the block (R1);
**characterized in that** the module (F2) for low speed regulation further comprises:
• additional inputs through which the said device receives measurements and/or estimates of the resistive torque (C) applied to each wheel of the vehicle;
• a complementary block (R3) for compensation of the resistive torque of each wheel, receiving the measurements and/or the estimates of the resistive torque (C) applied to each wheel of the vehicle, delivering the compensation of the resistive torque (58) which is to be applied;
• a supplementary summer (57) generating a signal (59) corresponding to the result of the sum between a torque control signal (56) to be applied on each wheel of the vehicle generated by the acceleration regulator block (R2) and the compensation of the resistive torque (58) to be applied.

2. Device according to Claim 1, **characterized in that** it comprises a block (L1) receiving at the input a control signal in acceleration (52) generated by the block (R1) for regulating the speed and generating at the output a control signal (53) in acceleration, the said signal (53) being limited to a certain level defined statically or dynamically.

3. Device according to Claims 1 or 2, **characterized in that** it comprises a block (L2) receiving at the input either the signal (56) issued from the regulator (R2) or the signal (59) issued from the summer (57) and generating at the output a torque control signal (60) to be applied on each wheel of the vehicle, the said signal (60) being limited to that which the members acting on the dynamics of the vehicle can effectively provide.

4. Device according to any one of Claims 1 to 3, **characterized in that** it comprises a module (F3) receiving a signal (S07) comprising various information concerning the environment and the status of the vehicle and generating a signal (S08) corresponding to a torque setpoint suited to keeping the vehicle substantially immobile, the signal (S07) being transmitted to the module (F5) receiving the setpoints for speed regulation.

## Patentansprüche

1. Vorrichtung zum Steuern der Geschwindigkeit eines Fahrzeugs, insbesondere eines Kraftfahrzeugs, die Folgendes aufweist:
• ein Modul (F1), das einen Geschwindigkeitssollwert (S03) in Abhängigkeit von der Position des Gaspedals des Fahrzeugs (S01) erzeugt;
• einen Geschwindigkeitsregler (F2), der Momentsollwerte (S05) erzeugt;
• ein Modul (F4), das Momentsollwerte (S11) erzeugt;
• ein Modul (F5), das die Momentsollwerte des Geschwindigkeitsreglers (F2) und der anderen Module (F4) empfängt, wobei das Modul (F5) bestimmt, welche empfangenen Sollwerte (S05, S06, S11, S12) in Abhängigkeit von der Lebenssituation des Fahrzeugs relevant sind, wobei das Modul (F5) Momentsollwerte ausgehend von den empfangenen Sollwerten (S05, S06, S11, S12), die als relevant betrachtet werden, erzeugt;
bei der das Modul (F2) zum Regeln der niedrigen Geschwindigkeit Folgendes aufweist:
• Eingänge, über die die Vorrichtung mindestens einen Geschwindigkeitssollwert (Cv) und Messungen und/oder Schätzungen der Geschwindigkeit (V) des Fahrzeugs empfängt;
• ein Subtrahierglied (50), das ein Signal (51) erzeugt, das dem Resultat des Unterschieds zwischen dem Geschwindigkeitssollwert (Cv) und der Geschwindigkeit (V) des Fahrzeugs entspricht;
• einen Block (R1) zum Regeln der Geschwindigkeit, der das Signal (51) des Subtrahierglied (50) empfängt, der einen Momentbefehl (S05) erzeugt, der die Abweichungen zwischen der Geschwindigkeit (V) des Fahrzeugs und den Geschwindigkeitssollwerten (Cv) ausgleicht;
und bei der das Modul (F2) zum Regeln der niedrigen Geschwindigkeit Folgendes aufweist:
• zusätzliche Eingänge, über welche die Vorrichtung Messungen und/oder Schätzungen der Längsbeschleunigung (A) des Fahrzeugs empfängt;
• ein zusätzliches Subtrahierglied (54), das ein Signal (55) erzeugt, das dem Resultat des Unterschieds zwischen einem Signal zum Steuern in Beschleunigung (52, 53), das von dem Block (R1) zum Regeln der Geschwindigkeit erzeugt wird, und der gemessenen Längsbeschleunigung oder der geschätzten Längsbeschleunigung (A) des Fahrzeugs entspricht;
• einen zusätzlichen Block (R2) zum Regeln der Längsbeschleunigung, der das Signal (55) des Subtrahierglieds (54) empfängt, der Befehle zum Regeln erzeugt, die die Unterschiede zwischen der gemessenen Längsbeschleunigung oder geschätzten Längsbeschleunigung (A) des Fahrzeugs und dem Beschleunigungsbefehl (52, 53), der von dem Block (R1) erzeugt wird, ausgleicht;
**dadurch gekennzeichnet, dass** das Modul (F2) zum Regeln der niedrigen Geschwindigkeit ferner Folgendes aufweist:
• zusätzliche Eingänge, über die die Vorrichtung Messungen und/oder Schätzungen des Widerstandsmoments (C), das an jedes Rad des Fahrzeugs angelegt wird, empfängt;
• einen zusätzlichen Block (R3) zum Ausgleichen des Widerstandsmoments jedes Rad, der Messungen und/oder Schätzungen des Widerstandsmoments (C), das an jedes Rad des Fahrzeugs angelegt wird, empfängt, der den Ausgleich des anzulegenden Widerstandsmoments (58) liefert;
• einen zusätzlichen Summierer (57), der ein Signal (59) erzeugt, das dem Resultat der Summe aus einem Steuersignal (56) des Moments, das an jedes Rad des Fahrzeugs anzulegen ist, das von dem Beschleunigungsreglerblock (R2) erzeugt wird, und dem Ausgleich des anzulegenden Widerstandsmoments (58) entspricht.

2. Vorrichtung nach Anspruch 1, **dadurch gekennzeichnet, dass** sie einen Block (L1) aufweist, der am Eingang ein Beschleunigungssteuersignal (52), das von dem Regelblock (R1) der Geschwindigkeit erzeugt wird, empfängt, und am Ausgang ein Beschleunigungssteuersignal (53) erzeugt, wobei das Signal (53) auf einen bestimmten Pegel, der statisch oder dynamisch bestimmt wird, beschränkt ist.

3. Vorrichtung nach den Ansprüchen 1 oder 2, **dadurch gekennzeichnet, dass** sie einen Block (L2) aufweist, der am Eingang entweder das Signal (56), das aus dem Regler (R2) stammt, oder das Signal (59), das aus dem Summierer (57) stammt und am Ausgang ein Steuersignal (60) des Moments, das auf jedes der Räder anzulegen ist, erzeugt, wobei das Signal (60) auf das beschränkt ist, was die Organe, die auf die Dynamik des Fahrzeugs einwirken, effektiv liefern können.

4. Vorrichtung nach einem der Ansprüche 1 bis 3, **dadurch gekennzeichnet, dass** sie ein Modul (F3) aufweist, das ein Signal (S07) empfängt, das verschiedene Informationen über die Umgebung und den Zustand des Fahrzeugs enthält und ein Signal (S08) erzeugt, das einem Momentsollwert entspricht, der das Fahrzeug im Wesentlichen bewegungslos halten kann, wobei das Signal (S07) an das Modul (F5), das die Geschwindigkeitsregelsollwerte empfängt, übertragen wird.
